# EUROPEAN PATENT SPECIFICATION

(11) **EP 4 191 424 B1**
(45) Date of publication and mention of the grant of the patent: **09.07.2025**
(21) Application number: 21929338.8
(22) Date of filing: 27.12.2021
(51) Int. Cl.: G06F 13/36, G06F 13/38, H04L 12/437

(54) **DUAL-REDUNDANT BUS FOR AUTOMATED MONITORING SYSTEMS**
ZWEIFACH REDUNDANTER BUS FÜR AUTOMATISIERTE ÜBERWACHUNGSSYSTEME
BUS DOUBLE POUR SYSTÈMES DE CONTRÔLE AUTOMATISÉ

(30) Priority: 03.03.2021 RU 2021105401
(43) Date of publication of application: 07.06.2023
(73) Proprietor: Federal State Unitary Enterprise "All-Russian Research Institute Of Automatics" (FSUE "VNIIA"), Moscow, 127030 (RU)
(72) Inventor: KISHKIN, Vladimir L'vovich, Moscow, 115172 (RU); NARITS, Aleksandr Dmitrievich, Moscow, 109451 (RU); NOVIKOV, Aleksandr Aleksandrovich, Moscow, 125480 (RU); TIKHONOV, Yuri Nikolayevich, Moscow, 111538 (RU); BORZENKO, Andrey Aleksandrovich, Moscow, 123103 (RU)
(74) Representative: Yalçiner Patent and Consulting Ltd.
(86) International application number: PCT/RU2021/000596
(87) International publication number: WO 2022/186723

(56) References cited:
- RU-C1- 2 430 400
- RU-C1- 2 431 174
- RU-C1- 2 431 174
- RU-C1- 2 450 305
- RU-C1- 2 450 305
- US-A1- 2009 119 437
- US-A1- 2016 275 029
- "Industrial communication networks - Fieldbus specifications - Part 4-2: Data-link layer protocol specification - Type 2 elements", 18 April 2019 (2019-04-18), pages 1 - 380, XP082015403, Retrieved from the Internet <URL:ftp://standard.iec.ch/iec61158-4-2{ed4.0}en.pdf> [retrieved on 20190418]

## Description

This invention relates to automation and computing and can be used in instrumentation and control systems of nuclear power plants (NPP I&C Systems) and other industrial facilities.

The system bus within the NPP I&C System combines information and management of up to 800 bus clients, i.e. automation equipment and workstations that are part of the Software and Hardware Complexes (SHC) of Normal Operation and the Control Safety System (CSS).

A redundant EN system bus, built on the basis of an industrial Ethernet switched interface (Industrial Ethernet) and full-duplex point-to-point connections, is widely used in modem NPP I&C System complexes. RF Patent No. 2431174, IPC G05B 19/418, 10.10.2011, RF Patent No. 2430400, IPC G05B 19/418, 27.09.2011.

The EN bus redundancy is carried out by reconfiguring connections in a common data transmission environment using *Turbo Ring* technology. This technology is based on the so-called *virtual ring* of sequentially connected network switches, one of which, assigned as a redundancy manager, keeps the ring open and controls the integrity of backbone connections between switches in the ring by transmitting control telegrams from one end of the ring and receiving them from the other end. If the integrity of connections within the ring is disrupted, the redundancy manager restores it by closing the ring at the control point.

This technology has found wide application in I&C Systems of industrial facilities due to the short reconfiguration time required for the ring segment, which is about 20 ms with the number of network switches in the ring no more than 250 and the minimum number of excess connections required for network reconfiguration that restore its operability.

Nonredundant and redundant automation equipment such as automation processors (AP) are connected to the EN bus via two client channels A and B, via channel A to a single network switch, via channel B to another network switch from a single virtual ring. To ensure the bus operability restoration, the bus is reconfigured by the redundancy manager in case of a switch failure, together with switching the automation processor connected to this switch to another channel.

Data is transmitted over the EN bus in the form of address and broadcast telegrams of the application layer using standard protocols of the datalink and physical layers of the Industrial Ethernet interface of AP communication modules that are part of the bus and provide logical and physical connection of APs to the bus.

A protocol for transmitting the process analog and discrete data and the NPP I&C System diagnostic data is used at the application layer of the EN bus.

At the datalink layer of the Industrial Ethernet interface, the transmission of address application telegrams is carried out in accordance with the standards IEEE802.2, IEEE 802.3 via the LLC protocol in the data transmission mode 3 (LLC 3) with the confirmation of delivery by the LLC acknowledgment telegram and the repetition of transmission up to n times in case of non-receipt of the acknowledgment telegram. In order to identify a new telegram from a retransmitted one when receiving it, the LLC 3 protocol uses the numbering of address telegrams according to mod 2. The individual number of new telegram increases before transmission by 1 according to mod 2, the number of the retransmitted telegram does not change.

Switched industrial Ethernet has a high data transmission rate of up to 100 Mbit/s, which provides deterministic data transmission and random access to the bus. But at the same time, the Ethernet interface has a significant drawback - a high-intensity broadcast telegram flows in the bus, the so-called *broadcast storm,* when the bus section closes into a physical ring due to a fault or installation error during commissioning. In this case, the *broadcast storm* involves not only broadcast, but also address telegrams transmitted in broadcast mode in case of unavailability of the automation equipment, in other words, unavailability of the recipient of address telegrams over the bus due to its failure or disconnection. The EN bus operation experience has shown that the formation of physical rings in a bus built on the basis of Industrial Ethernet using virtual ring technology can occur due to bus failures or more often due to installation errors during commissioning. A *broadcast storm* can cause an overflow of the transmitting and receiving buffers of bus clients and switches and a disruption of data exchange between clients as a result. It can also result in overloading the processors of the clients' communication modules, if they have insufficiently high performance, as well as in a failure to perform other functions not related to the control of data transmission over the EN bus by the automation processor: data exchange with the process communication modules or disruption of the automation processors over the buses of the Control Security System (CSS). RF Patent No.2430400, IPC G05B 19/418, 27.09.2011.

The main disadvantage of above solutions is the disruption of data exchange during the *broadcast storm* on the EN bus between the automation processors connected to it due to the bus construction in the form of a common data transmission medium that is reserved by reconfiguration of connections.

There are known protocols: STP (Spanning Tree Protocol), IEEE 802.1D, and RSTP (Rapid Spanning Tree Protocol), IEEE 802.1D-2004, which enable the creation of a failure-resistant network architecture in a common data transmission environment that blocks ways for parallel transmission of broadcast telegrams and prevents the *broadcast storm* by reconfiguring the network. But a rather long network reconfiguration time, which is more than 1 minute in the STP protocol and more than 1 second in the RSTP protocol with no more than 7 switches in the network, does not permit to use it in industrial automation systems. A significant disadvantage of these protocols is also a large number of excess network connections, that requires significant amount of equipment in NPP instrumentation and control systems distributed over a large area.

The redundant EN bus is known in the software and hardware complex of instrumentation and control automation tools. The redundant bus consists of two independent and nonconnected informationally and physically EN buses: ENa and ENb, built using the *virtual ring* technology. Nonredundant automation processors and each of the two redundant automation processors are connected via one channel to the ENa bus network switch, and via the other channel to the ENb bus network switch. Redundant automation processors are connected to each other via two serial interfaces for hot redundancy management, built on the basis of self-control function integrated into automation processors. RF Patent No. 2450305, IPC G05B 19/00, 10.05.2012. This technical solution is adopted as a prototype.

The transmission of address telegrams over the bus is carried out only by one of two redundant automation processors, which is active for the moment, and only by one ENa or ENb bus, through which the automation processor as the telegram recipient was available during previous telegram transmissions, the second automation processor and the second bus are in a state of hot reserve. Address telegrams are received by an active automation processor over the ENa or ENb bus through which the telegram is received.

Transmission and receipt of broadcast telegrams is carried out by an active automation processor simultaneously on both ENa and ENb buses.

If the recipient automation processor is unavailable after an n-fold transmission repetition over the LLC protocol in mode 3 over a single bus (for instance, ENa), the recipient's address is placed in the list of unavailable automation processors for this bus and the telegram is retransmitted over the ENb bus in the same way, the typical value is n = 2. The telegram transmission session ends after it is transmitted over the ENb bus or when the recipient is unavailable after the transmission is repeated twice. If the transmission over the ENb bus channel completes successfully, the sender transmits new telegrams to the same recipient based on the data in the ENb bus unavailability table.

The redundant bus consisting of two buses, each of which has its own data transmission medium, maintains serviceability at the physical layer when one of them closes into a physical ring due to error-free data transmission over the other serviceable physical bus, to which the broadcast storm on the faulty bus does not apply. But there are no means that completely exclude the broadcast storm impact on the communication module processors in this redundant bus. As a result, this bus has the following disadvantages:
- processors of clients' communication modules can be overloaded with broadcast telegrams when a section of one of two buses is closed into a physical ring and certain processor functions are disrupted, if the performance of communication processors is not high enough,
- reception and execution of delayed address and broadcast telegrams with irrelevant data generated on a faulty bus during a *broadcast storm,* and irregularities of the telegram processing procedure at the application layer as a result,

This invention eliminates these disadvantages.

The technical result of this invention is an enhanced reliability of the automation complex due to the organization of error-free operation of the automation complex in case of failures and switching errors resulting in the bus section formation into a physical ring, causing a *broadcast storm.*

The technical result is achieved by the fact that in the redundant EN-2 bus, including:
unconnected first and second buses, made in accordance with the standard of switched Industrial Ethernet and point-to-point connections using Turbo Ring technology for serial connection of network switches into a *virtual* ring;
communication modules connecting redundant automation processors to the bus via the first and second channels: via the first channel - to the switches of the first bus, via the second channel - to the switches of the second bus, at the same time, each pair of redundant automation processors is connected via an interprocessor interface, has a common network address and internal self-control and redundancy management tools;
at that, communication modules of automation processors are installed (in compliance with the data communication model of OSI (Open Systems Interconnection) terminals) with standard Ethernet interface protocols that control data transmission over the bus: PHY (PHYsical) physical protocol at OSI physical layer 1, LLC (Logical Link Control) logical link protocol, and MAC (Medium Access Control) data medium access protocol at OSI datalink layer 2, and AMP (Application Program Module) unified application protocol of the EN bus at OSI application layer 7;
communication modules are additionally incorporated into the redundant bus according to the present invention, these modules connect redundant gateway units (hereinafter as: gateways) that transmit process and diagnostic data between low-level automation devices and the Unit Upper Level System in compliance with the data communication model of OSI terminals (of layers 1, 2, 7) and are independent with their own network addresses and external redundancy management by the Unit Upper Level System;
in addition to the unified OSI layer 7 application data transfer protocol and standard OSI layer 1, 2 protocols, the RPM (Reserving Program Module) redundancy service at the OSI layer 7 is installed in the communication modules of automation processors and gateways, which controls the synchronous transmission of address and broadcast telegrams over the first and second buses of the redundant bus over the LLC protocol in mode 1 with the confirmation of address telegram delivery within the RPM service via at least one of the buses and which generates individual address telegram numbers for the module L during transmission and analysis of the procedure for issuing telegrams relative to the number of the last received telegram in order to receive new telegrams and discard delayed duplicates of previously received telegrams;
on the MAC sublayer of OSI layer 2, in the first and second channels of the automation processor, the first service for filtering TF (Telegram Filter) telegram flows (that occur during a *broadcast storm* and consist of broadcast and address telegrams transmitted in broadcast mode when the recipient is unavailable) is installed; on the MAC sublayer of OSI layer 2, in the first and second channels of the gateway, a second TF1 filtering service of these telegram flows is installed, preventing the overload of communication module processors, respectively, automation processors and gateways and the execution of delayed irrelevant telegrams during a *broadcast storm.*

The essence of the invention is illustrated by drawings.

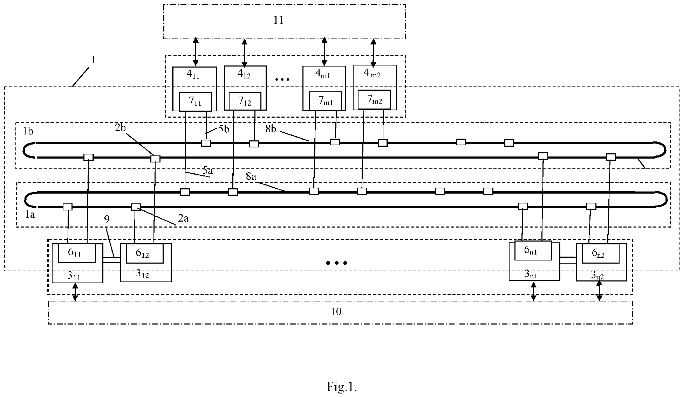

Figure 1 schematically shows the redundant bus as part of the automation system, made as an example in the form of a single ring segment, using Turbo Ring technology, where:
   1 - redundant bus;
   1a - the first physical data transfer bus of the redundant bus 1;
   1b - the second physical data transfer bus of the redundant bus 1;
   2a, - network switches of the first 1a bus;
   2b - network switches of the second 1b bus;
   3₁₁, 3₁₂-3ₙ₁, 3ₙ₂ - redundant automation processors with internal redundancy management;
   4₁₁, 4₁₂-4ₘ₁, 4ₘ₂ - redundant interface gateways with external redundancy management from the UULS 11;
   5a - cable for connecting the first data transmission channel of the communication module to the network switch 2a of the 1a bus;
   5b - cable for connecting the second channel of the communication module to the network switch 2b of the 1b bus;
   6₁₁, 6₁₂-6ₙ₁, 6ₙ₂ - communication modules of automation processors 3₁₁, 3₁₂-3ₙ₁, 3ₙ₂ included in the bus 1;
   7₁₁, 7₁₂-7ₘ₁, 7ₘ₂ - communication modules of gateways 4₁₁, 4₁₂-4ₘ₁, 4ₘ₂ included in the bus 1;
   8a - backbone communication cable of network switches 2a of the 1a bus;
   8b - backbone communication cable of network switches 2b of the 1b bus;
   9 - control lines for redundancy of automation processors.
   10 - process control equipment;
   11 - the Unit Upper Level System (UULS).

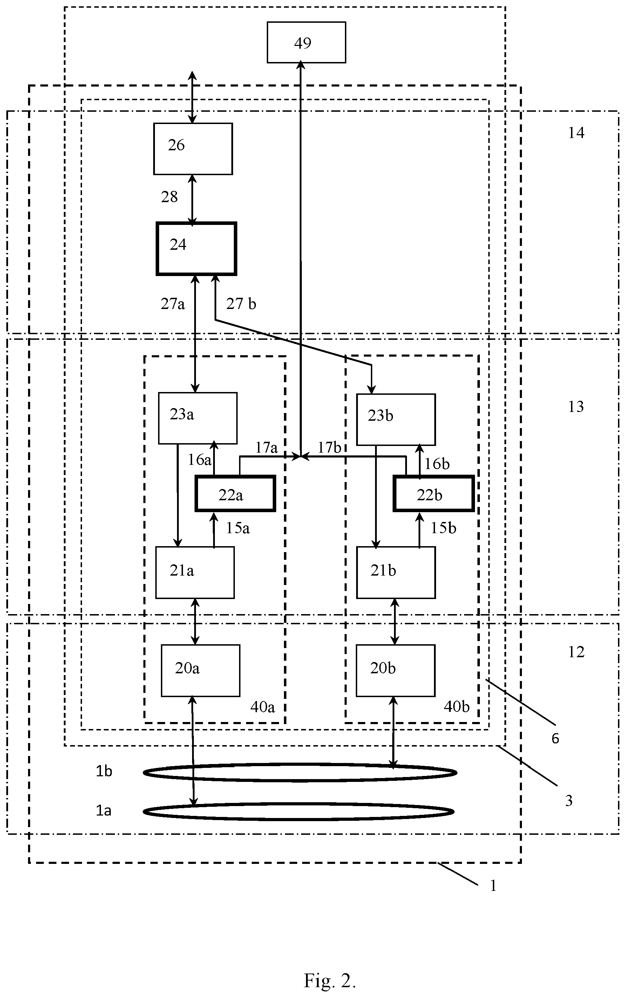

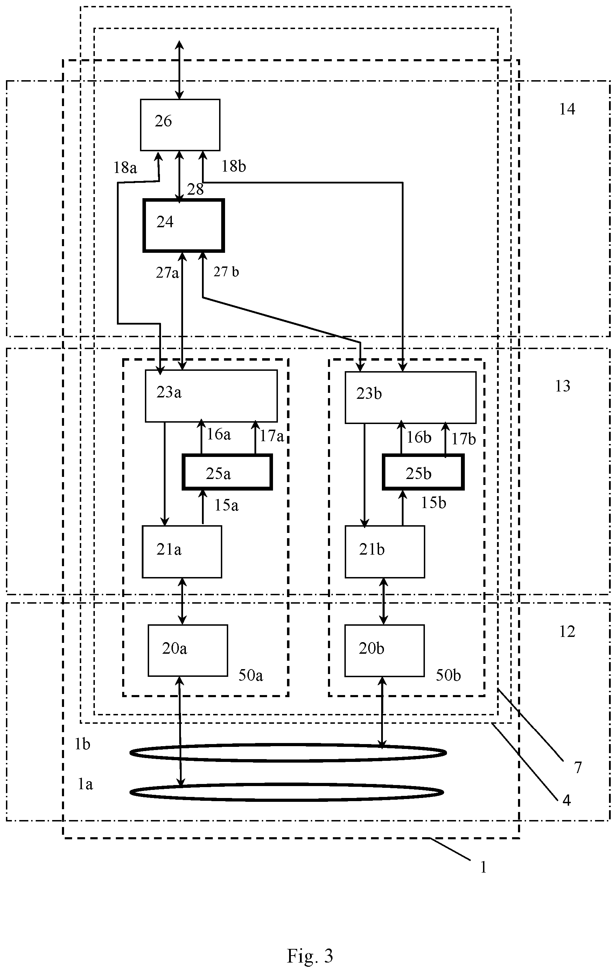

Fig. 2 and Fig. 3 schematically show structures of the redundant bus data model implemented, respectively, in the communication modules 6 of the automation processors 3 and in the communication modules 7 of the gateways 4, which are part of the redundant bus 1, where:
   1 - redundant bus segment;
   1a - the first physical data transfer bus of the redundant bus 1;
   1b - the second physical data transfer bus of the redundant bus 1;
   3 - automation processor;
   4 - gateway;
   6 - communication module of the automation processor;
   7 - communication module of the gateway;
   12 - physical layer 1 of the standard seven-layer information model of the OSI network (Open Systems Interconnection);
   13 - datalink layer 2 of the OSI network information model;
   14 - layer 7 of the OSI network application data model;
   15a - telegram receipt line through the first channel 40a of the communication module 6 of the automation processor 3 and the first channel 50a of the communication module 7 of the gateway 4, respectively, to the first filtration service 22a of the automation processor and to the second filtration service 25a of the gateway;
   15b - telegram receipt line, through the second channel 40b of the communication module 6 of the automation processor 3 and the second channel 50b of the communication module 7 of the gateway 4, respectively, to the first filtration service 22a of the automation processor and to the second filtration service 25a of the gateway;
   16a, 16b - telegram transmission lines from the filtering services, respectively 22a and 22b, to the LLC protocol 23 of the communication module 6 of the automation processor 3 and from filtering services, respectively 25a and 25b, to the LLC protocol 23 of the gateway 4, respectively, on the first and second channels;
   17a, 17b - transmission lines of broadcast time synchronization SYN telegrams from the first filtering services, respectively 22a and 22b, to the real-time counter 49 of the automation processor 3, respectively, through the first and second channel of the communication module 6 of the automation processor 3;
   18a, 18b - transmission/reception lines for TLB (TeLegram - Broadcast) broadcast telegrams to/from the application protocol 26, respectively, through the first and second channel of the gateway 4;
   20a - physical protocol PHY of the Industrial Ethernet interface of the first channel of communication modules 6, 7, IEEE 802.3 standard, 2000 Edition;
   20b - physical protocol of the Industrial Ethernet interface of the second channel of communication modules 6, 7, IEEE 802.3 standard, 2000 Edition;
   21a - MAC protocol for access to the data transmission medium of the Industrial Ethernet interface of the first channel of communication modules 6, 7, IEEE 802.3 standard, 2000 Edition;
   21b - MAC protocol for access to the data transmission medium of the Industrial Ethernet interface of the second channel of communication modules 6, 7, IEEE 802.3 standard, 2000 Edition;
   22a - the first TF filtering service of telegrams received via the first 1a bus, additionally installed according to the present invention in the first channel 40a of the communication module 6 of the automation processor 3;
   22b - the first TF filtering service of telegrams received via the second 1b bus, additionally installed according to the present invention in the second channel 40b of the communication module 6 of the automation processor 3;
   23a - protocol of the logical link LLC of the Industrial Ethernet interface, IEEE 802.2 1998 Edition standard, the first channel of communication modules 6, 7;
   23b - protocol of the logical link LLC of the Industrial Ethernet interface, IEEE 802.2 1998 Edition standard, the second channel of communication modules 6, 7;
   24 - RPM redundancy service, additionally introduced according to the present invention into the standard data model at level 7 OSI 14;
   25a - the second filtering service TF1 of telegrams received via the first 1a bus, additionally installed according to the present invention in the first 50a channel of the communication module 7 of the gateway;
   25b - the second filtering service TF1 of telegrams received via the second 1b bus, additionally installed according to the present invention in the second 50b channel of the communication module 7 of the gateway;
   26 - unified EN bus application protocol;
   27a - transmission/reception line of TLA_{R} (TeLegram - Address) application address telegrams in the RPM service format and ACK (ACKnoledge) acknowledgment telegrams to/from the first channel of the communication module 6 of the automation processor 3 and the communication module 7 of the gateway 4;
   27b - transmission/reception line of TLA_{R} application address telegrams in the RPM service format and ACK (ACKnoledge) acknowledgment telegrams to/from the second channel of the communication module 6 of the automation processor 3 and the communication module 7 of the gateway 4;
   28 - transmission/reception line of applied address TLA telegrams;
   40a, 40b - the first, second channels of the communication module 6 of the automation processor 3;
   49 - real-time counter of the automation processor;
   50a, 50b - the first and second channels of the communication module 7 of the gateway 4.

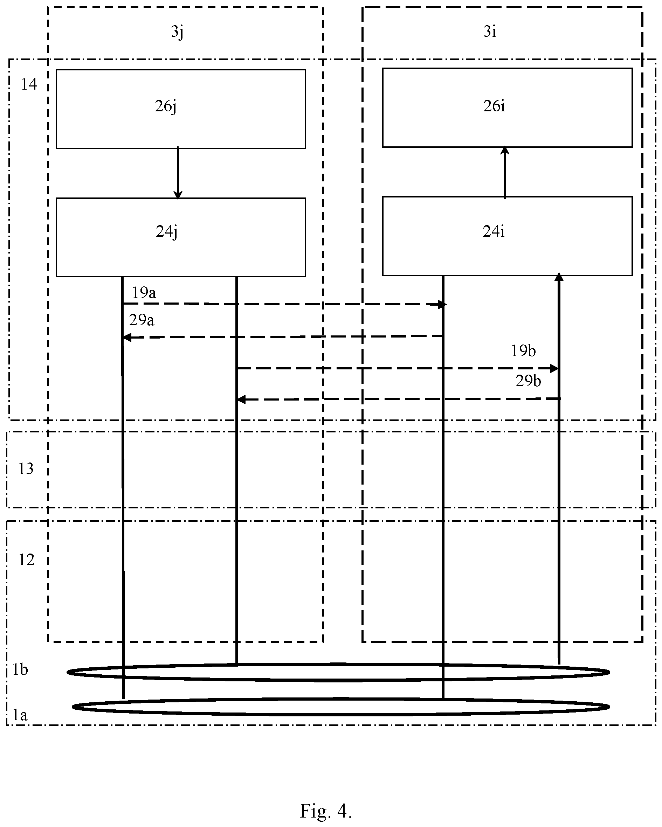

Fig. 4 schematically shows the structure for transmitting TLA_{R} application address numbered telegrams at the RPM 24 service layer, attached to the telegram frames of the datalink layer 13, via two buses: the first bus 1a and the second bus 1b of the redundant bus between automation devices: the automation device - the sender of telegrams ASj (Automatic device - Source), then the sender device and the automation device - the recipient of telegrams ADi (Automatic device - Destination), then the recipient device on the example of the telegram exchange between two nonredundant automation processors, where:
   1a, 1b - the first and second physical buses of the redundant bus;
   3j, 3i - automation processors representing, respectively, the ASj telegram sender device and the ADi telegram receiver device;
   12 - physical layer 1 of the standard seven-layer OSI network information model;
   13 - channel layer 2 of the OSI network information model;
   14 - layer 7 of the OSI network application information model;
   19a, 19b - conditional transmission lines between the RPM redundancy services of automation processors 3j, 31, respectively, via the first bus 1a and the second bus 1b of TLA_{R} (INji, FNji, TLA) application address telegrams (in the RPM service format) attached to LLC telegrams of the datalink layer 13; where INji (Individual Number) is the individual telegram number, FNji (Frame Number) is the repeated frame number;
   24j - RPM redundancy service of the sending device 3j;
   24i - RPM redundancy service of the receiving device 3i;
   26j - APM application protocol of the sending device 3j;
   26i - APM application protocol of the receiving device 3i;
   29a, 29b - conditional transmission lines between the RPM redundancy services of automation processors 3j, 31, respectively, via the first bus 1a and the second bus 1b of ACK acknowledgment telegrams (IDij, IFij, STij) (in the RPM service format) attached to LLC telegrams, where IDij (IDentifier) - the acknowledgment telegram identifier, IFij (Frame IDentifier) - the acknowledgment telegram repeated frame identifier, STij (STatus) - status of the APM 26i application protocol for the address telegram recipient device.

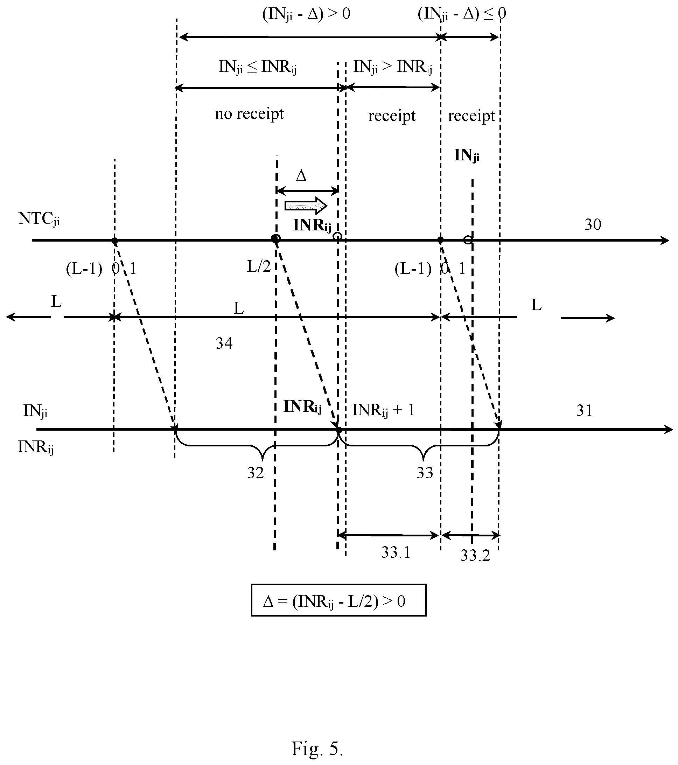

Figure 5 shows the diagram illustrating, on the time axis, changes in the state of the NTCji (Number Telegram Counter) cyclic counter generating individual address telegram numbers by the module L and changes in individual INji numbers of sequentially transmitted telegrams between the network sending device ASj and the receiving device ADi, as well as generating logical conditions for receiving/not receiving telegrams based on the analysis of their individual numbers by the receiver device relative to the individual number of the last INRij telegram received by it, if the value Δ = (INRᵢⱼ - L/2) > 0, where:
   30 - time axis for changing the NTCji cyclic counter state by the module L;
   31 - time axis for changing individual INji numbers of sequentially transmitted telegrams between the sending device ASj and the receiving device ADi;
   32 - INji range of non-received telegrams by the receiving device ADi, provided: INji ≤ INRji;
   33 - INji range of received telegrams by the receiving device ADi;
   33.1 - INji sub-range of received telegrams by the receiving device, provided: INji > INRij;
   33.2 - sub-range of received telegrams, provided: (Inji - Δ) ≤ 0;
   34 - current cycle for generating individual telegram numbers in the NTCji counter.

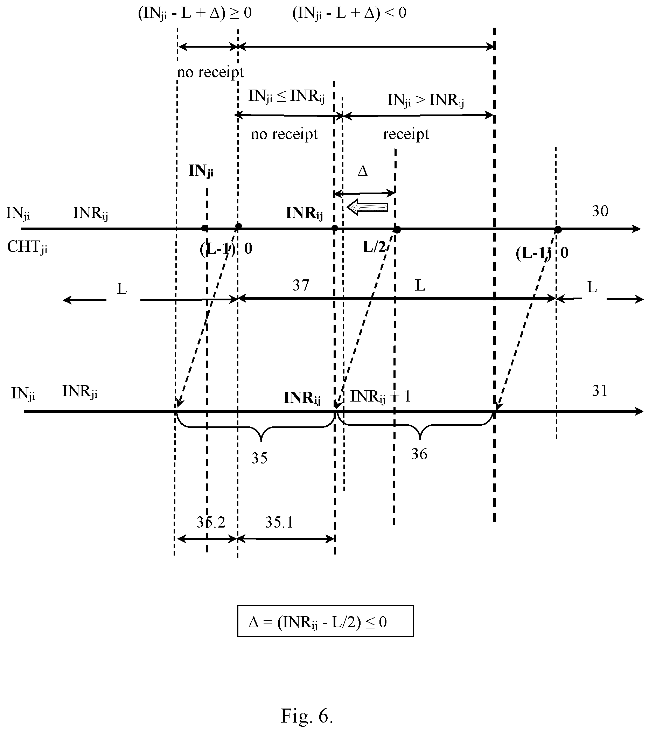

Figure 6 shows the diagram illustrating, on the time axis 30, changes in the state of the NTCji cyclic counter by the module L and, on the time axis 31, changes in individual INji numbers of sequentially transmitted telegrams between the network sending device ASj and the receiving device ADi, as well as generating logical conditions for receiving/not receiving telegrams based on the analysis of their individual numbers by the receiver device relative to the individual number of the last INRij telegram received by it, if the value Δ = (INRᵢⱼ - L/2) ≤ 0, where:
   35 - INji range of not received telegrams by the receiving device Adi;
   35.1 - INji sub-range of not received telegrams by the receiving device ADi, provided: INji ≤ INRij;
   35.2 - sub-range of not received telegrams, provided: (INji - L + Δ) ≥ 0;
   36 - INji range of received telegrams by the receiving device ADi, provided: INji > INRji,

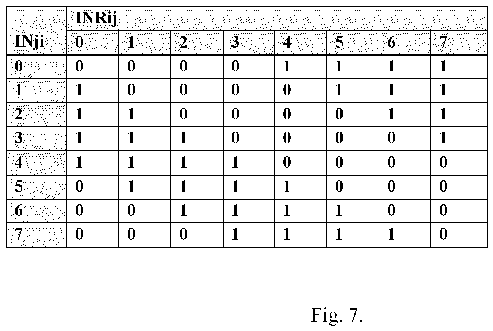

Figure 7 shows (based on the example of generating individual numbers of transmitted address telegrams using a cyclic counter by the module L = 8) a tabular form of making a decision on receiving a telegram by the receiving device in the form of flag with a value of 1, or not receiving a telegram in the form of flag with a value of 0 any combination of the individual number of the incoming address telegram INji = 0 ÷ 7 and the individual number of the last received telegram INRij = 0 ÷ 7.

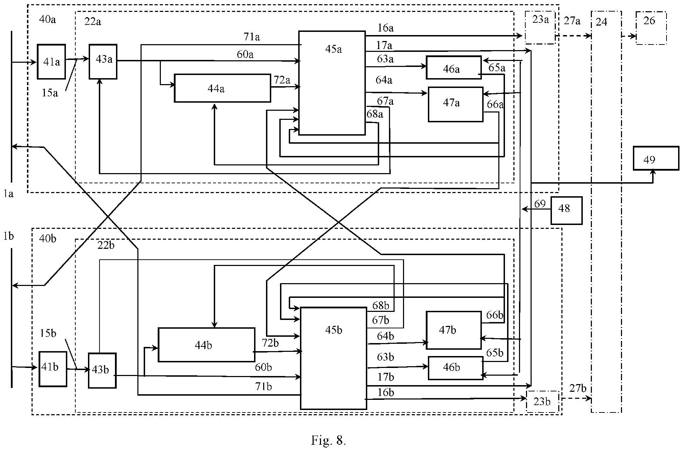

Figure 8 shows the structure of first filtering services for broadcast and address telegrams received via the first 1a and second 1b bus of the redundant bus, respectively, in the first 40a and second 40b channels of the communication module 6 of the automation processor 3, Fig. 2, where:
   15a - telegram receipt line via the first channel 40a of the communication module 6 of the automation processor 3 to the first filtration service 22a of the automation processor;
   15b - telegram receipt line via the second channel 40b of the communication module 6 of the automation processor 3 to the first filtering service 22b of the automation processor;
   16a, 16b - transmission lines for address telegrams, respectively, to LLC protocols 23a, 23b in the first, second channels 40a, 40b of the automation processor;
   17a, 17b - transmission lines for broadcast SYN time synchronization telegrams to the real-time counter 49 from telegram processors, respectively, 45a, 45b of the first, second channels of the 40a, 40b automation processor;
   22a, 22b - first telegram filtering services, respectively, in the first, second channels 40a, 40b of the automation processor;
   40a, 40b - first, second channels of the automation processor;
   41a, 41b - channels of direct access to memory, respectively, of the first, second channels 40a, 40b of the automation processor;
   43a, 43b - receiving telegram buffers of the first filtering service, respectively, in the first, second channels 40a, 40b of the automation processor;
   44a, 44b - telegram counters of the first filtering service, respectively, in the first, second channels 40a, 40b of the automation processor;
   45a, 45b - telegram processors of the first filtering service, respectively, in the first, second channels 40a, 40b of the automation processor;
   46a, 46b - the first timeouts of the first filtering service, respectively, in the first, second channels 40a, 40b of the automation processor;
   47a, 47b - the second timeouts of the first filtering service, respectively, in the first, second channels 40a, 40b of the automation processor;
   48 - timer 100 Hz of the communication module 6, of the automation processor 3;
   49 - the real-time counter of the automation processor 3, Fig. 8, Fig. 2;
   60a, 60b - telegram reading lines from the receiving buffers, respectively, 43a, 43b;
   63a, 63b - lines for starting the first timeouts, respectively 46a, 46b, in the first, second channels 40a, 40b of the automation processor by the first telegram of the corresponding channel received after the completion of the current first timeout of this channel;
   64a, 64b - lines for starting the second timeouts, respectively 47a, 47b, in the first, second channels 40a, 40b of the automation processor by the first telegram of the corresponding channel received after the completion of the current second timeout of this channel;
   65a, 65b - lines for reading the end state of first timeouts, respectively 46a, 46b, in the first, second channels 40a, 40b of the automation processor;
   66a, 66b - lines for prohibiting the execution of broadcast SYN time synchronization telegrams during the time of second timeouts of both channels, respectively 47a, 47b;
   67a, 67b - lines for blocking processing by interrupt in telegrams arriving into the receiving buffers, respectively 43a, 43b, when the corresponding telegram counter 44a, 44b overflows before the end of the first timeout, respectively 46a, 46b;
   68a, 68b - lines for resetting telegram counters, respectively 44a, 44b, at the end of the countdown of first timeouts, respectively 46a, 46b, in the first, second channels 40a, 40b of the automation processor;
   69 - line for counting signals of first timeouts 46a, 46b and second timeouts 47a, 47b of first filtering services from timer 48 with a frequency of 100 Hz;
   71a - line for transmitting to the 1b bus the UULS notification telegram about a *broadcast storm* over the 1a bus;
   71b - line for transmitting to the 1a bus the UULS notification telegram about a *broadcast storm* over the 1b bus;
   72a, 72b - overflow signals of telegram counters, respectively 44a, 44b.
Figure 8 also shows dotted connections of first filtering services 22a, 22b of automation processors with protocols of the bus information model 23a, 23b, 24, 26, Fig. 2.
Figure 9 shows the structure of second filtering services for broadcast and address telegrams received via the first, second bus 1a, 1b of the redundant bus, respectively, in the first and second channels of the communication module 7 of the gateway 4, Fig. 3, where:
   15a - line for receiving telegrams via the first channel of the communication module 7 of the gateway 4, Fig. 9, Fig. 4, to the second filtering service 25a of the gateway 4;
   15b - line for receiving telegrams via the second channel of the communication module 7 of the gateway 4, Fig. 9, Fig. 4, to the second filtering service 25b of the gateway;
   16a, 16b - lines for transmitting filtered address telegrams, respectively, to LLC protocols 23a, 23b in the first, second channels 50a, 50b of the gateway, Fig. 9, Fig. 4;
   25a, 25b - second telegram filtering services, respectively, in the first, second channels 50a, 50b of the gateway, Fig. 9, Fig. 4;
   50a, 50b - first, second channels of the gateway, Fig. 9, Fig. 4;
   51a, 51b - channels for direct memory access, respectively, of the first, second channels 50a, 50b of the gateway;
   53a, 53b - receiving telegram buffers of the second filtering service, respectively, in the first, second channels 50a, 50b of the gateway;
   54a, 54b - telegram counters of the second filtering service, respectively, in the first, second channels 50a, 50b of the gateway;
   55a, 55b - telegram processors of the second filtering service, respectively, in the first, second channels 50a, 50b of the gateway;
   56a, 56b - first timeouts, respectively, in the first, second channels 50a, 50b of the gateway;
   58 - 100 Hz timer of the gateway communication module;
   80a, 80b - lines for reading telegrams from receiving buffers, respectively 53a, 53b;
   83a, 83b - lines for starting first timeouts, respectively 56a, 56b, in the first, second channels 50a, 50b of the gateway by the first telegram of the corresponding channel received after the completion of the current first timeout of this channel;
   85a, 85b - lines for reading the end state of first timeouts, respectively 56a, 56b, in the first, second channels 50a, 50b of the automation processor;
   87a, 87b - lines for blocking processing by interrupt of telegrams arriving into the receiving buffers, respectively 53a, 53b, when the corresponding telegram counter 54a, 54b overflows before the end of the first timeout, respectively 56a, 56b;
   88a, 88b - lines for resetting telegram counters, respectively 54a, 54b, at the end of the countdown of first timeouts, respectively 46a, 46b, in the first, second channels 50a, 50b of the gateway;
   89 - line for counting signals of first timeouts 46a, 46b of second filtering services from timer 58 with a frequency of 100 Hz;
   91a - line for transmitting to the 1b bus the UULS notification telegram about a *broadcast storm* over the 1a bus;
   91b - line for transmitting to the 1a bus the UULS notification telegram about a *broadcast storm* over the 1b bus;
   92a, 92b - overflow signals of telegram counters, respectively 54a, 54b;

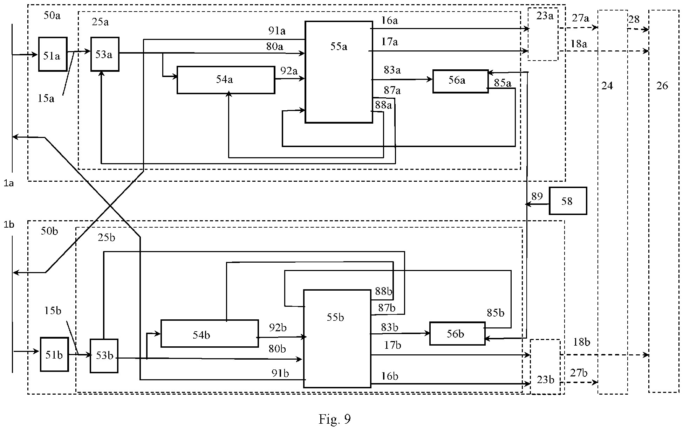

Figure 9 also shows dotted connections of second filtering services 25a, 25b of gateways with protocols of the bus information model 23a, 23b, 24, 26, Fig. 3.

The redundant bus 1, schematically shown in Fig. 1, provides the following functions of a redundant software and hardware complex for automated process control to be performed: data exchange between redundant automation processors 3, required for automated process control 10; reception by automation processors of commands for remote control of process actuators from the Unit Upper Level System 11 through redundant gateways 4 and their execution; transmission by automation processors 3 of data on the process and automation complex status to the gateways 4 for subsequent transmission to the Unit Upper Level System for analysis and management.

In a redundant automation system, data exchange over a redundant bus is controlled and processed in accordance with applied automation algorithms by one of the redundant automation processors 3, for example, 3₁₁, which is currently active, another automation processor, respectively 3₁₂, which is currently passive, operates in hot reserve mode. Redundant automation processors 3, for example, 3₁₁, 3₁₂ are equipped with built-in self-control and hot reserve management tools and are connected to each other via two separate serial interfaces 9, through which they receive information about the partner's operability, respectively 3₁₂, 3₁₁, in accordance with the results of self-control. Based on the data evaluation in accordance with the specified criteria, the active automation processor, 3 for example, 3₁₁, can be switched to the state of passive automation processor 3, respectively 3₁₂, and the passive processor to the active, i.e. the automation processor is switched to the reserve. Automation processors 3 are also switched to the reserve by time, in order to check the operability of redundant automation processors on real operating algorithms. Redundant automation processors are represented on the bus by the network address of an active automation processor, which is the same regardless what of the 2 redundant automation processors is active.

Redundant gateways 4, unlike automation processors, are independent and unconnected devices with external redundancy management by the Unit Upper Level System and are represented on the redundant bus 1 by different network addresses.

The redundant bus 1 is built on the Industrial Ethernet interface and includes: two directly unconnected first 1a and second 1b buses made using the Turbo Ring technology implemented in series connected via backbone connections 8 network switches 2; communication modules 6 of automation processors and communication modules 7 of gateways.

Communication modules 6 of each of the two redundant automation processors 3₁₁, 3₁₂; ... 3ₙ₁, 3ₙ₂, for example, 3₁₁ connect automation processors to the redundant bus through two channels: through the first channel - via the communication line 5a to the network switch 2a of the first bus 1a, through the second channel - via the communication line 5b to the network switch 2b of the second bus 1b, and that ensures the operability in case of any repeated failures of network equipment in one of the two buses (network switches 2, backbone communication lines 8, communication lines 5 of communication modules with network switches of this bus) by maintaining the operability of the other one.

At the same time, first channels of communication modules of the two redundant automation processors are connected respectively to two switches 2a of the first bus 1a, and second channels - to the two network switches 2b of the second bus 1b.

Each of the 2 buses, made using ring technology, is reserved by reconfiguring the ring, performed by one of the network switches connected in series to the ring via backbone links. This switch, assigned by the redundancy manager, keeps the ring open and monitors its integrity by transmitting control telegrams from one end of the ring and receiving them from the other end, connected to two backbone ports of the redundancy manager switch. If the integrity of connections within the ring is disrupted, the redundancy manager restores it by reconfiguring the bus, and it performs this by logically closing the ring at the control point.

In case of a single failure of backbone connections in one of the 2 buses 1a, 1b, the faulty bus operability is automatically restored by reconfiguring the ring. The operability of both buses is preserved.

In case of a single failure of communication module connections with switches in one of the buses, connections with automation equipment connected to this bus are disrupted. The redundant bus operability on both buses is fully restored by switching the automation processor to a reserve one connected to a serviceable switch via serviceable connections.

In case of connection failures of communication modules with switches in both buses, automation processors self-control tools switch them to a reserve automation processor connected to the buses via serviceable connections 5. The operability of both buses is preserved.

In case of connection failures of communication modules on both buses 1a, 1b due to switch failures causing disruption of the ring integrity and connections with automation processors, redundancy managers perform bus reconfiguration. At the same time, the operability of both buses is restored as a result of the fact that simultaneously with the reconfiguration, the automation processor is switched to a reserve one connected to the serviceable switches of the redundant bus.

The operability of the redundant bus is preserved in case of any two-time network equipment failures in both buses: backbone connections 8, connections of communication modules with switches 5, network switches 2, automation processor communication modules 6 and gateway communication modules 7 with the same amount of network equipment. This ensures a considerable increase in the reliability of the redundant bus with the same amount of network equipment compared to the bus whose redundancy is performed without duplication of ring segments.

Transmission of TLA address telegrams and TLB broadcast telegrams over the redundant EN-2 bus is carried out in accordance with the EN-2 bus information model shown in Fig. 2 for automation processors 3 and Fig. 3 for gateways 4. The information model is built on 3 standard layers of the Ethernet interface of the 7-layer OSI model: layer 1 - physical 12 with the PHY 20 protocol, layer 2 - datalink 13 with the MAC 21 data medium access protocol and the LLC 23 logical link protocol, and layer 7 - application 14 with the APM 26 application protocol, supplemented in accordance with the invention by the RPM 24 redundancy service at the application layer 14, by the first filtering services TF 22 of received telegrams in channels 40 of automation processors 3, Fig. 2, and by the second filtering services TF1 25 of received telegrams in channels 50 of gateways 4, Fig. 3, at the MAC sublayer 21 of OSI layer 2 13.

In accordance with Fig. 4, the TLA application address telegrams are transmitted by the ASJ 3j sender device to the ADi 3i receiving network device simultaneously over two independent buses 1a, 1b along conditional lines 19a, 19b in the form of 2 identical TLA_{R} frames (INji, FNji, TLA) of the RPM 24 redundancy service, which contain the TLA application address telegram and the individual INji number of this telegram and the FNji repeat frame number generated in the RPM service. The receiving device ADi 3i receives, using the mechanism of individual numbering of address telegrams presented below, one frame from two incoming telegram frames, extracts a TLA application telegram from this frame to transmit it to the APM application layer, generates an ACK acknowledgement telegram (IDij, IFij, STij) in the RPM service format in the form of 2 identical frames encapsulated in LLC telegrams in mode 1, where IDij is the receipt telegram identifier, IFij is the repeat frame identifier of the receipt telegram, STij is the APM protocol status in the 3i device and transmits it to the TLA telegram sender device via the conditional lines 29a, 29b of the 1a, 1b buses.

The current status of ASj and ADi devices in the procedure of transmitting address confirmation telegrams at the RPM layer is determined by the status parameters of clients in the RPM service.

The state (status) of the ASj sender device is determined by the following parameters:
NTCji (Number Telegram Counter) - value of the cyclic counter of telegram numbers by the module L,
RCji (Repeat Counter) - value of the counter of transmission of repeated telegram frames in case of non-delivery of the previous ones.

The state of the ADi receiving device is determined by the following parameters:
INRij - stored value of the individual number of the last TLA telegram received,
STij - value of the telegram delivery status to the APM layer, which can take one of the following values:
   STij = 01 - telegram is not delivered to the APM layer due to a temporary error and can be delivered during retransmission,
   STij = 10 - telegram is not delivered to the APM layer due to a constant error and cannot be delivered during retransmission,
   STij = 11 - telegram is successfully delivered to the APM layer and no retransmission is required.

Before transmitting the TLA address telegram, the sender device generates and assigns to it an individual INji number and a transmission number of the repeated FNji frame, which are placed together with the application telegram into the TLA_{R} frame of the address telegram in the RPM format: TLAR (INji, FNji, TLA).

Individual numbering of address telegrams is set for each pair of automation sending device ASj and automation receiving device ADi. That individual INji number of the address telegram transmitted from the ASj device to the ADi device is generated using a cyclic telegram number counter NTCji by the module L, where L is the maximum number of different individual numbers. Before transmitting the next TLA telegram, the ASj sending device increases the value of the NTCji counter by 1 for the module L in accordance with the telegram transmission order and assigns its value to the individual INji number.

If a new telegram or a previous repeated frame is not delivered to the receiving device during the timeout time Tout = 30 ms or is delivered with the device temporary error status STij = 01, then before transmitting the next repeated frame, the ASj device increases the RCji repetition counter value by 1, assigns its value to the FNji repeat frame number in the TLA_{R} telegram (INji, FNji, TLA). The INji value does not change when transmitting repeated frames. The maximum number of repeated frames transmitted and, accordingly, the RCji counter maximum value equals 2.

The TLA_{R} application address telegrams numbered at the RPM layer (INji, FNji, TLA), Fig. 4, are encapsulated in the LLC telegram data field, Fig. 2, Fig. 3, and transmitted via buses 1a, 1b by software modules LLCa, LLCb, Fig. 2, Fig. 3, to the ADi device, which, following the same model, receives them and allocates TLA_{R} application frames of the RPM layer from them, and it is equivalent to a direct exchange between ASj and ADi along lines 19a, 19b, 29a, 29b, conventionally shown in Fig. 4.

To transmit numbered address telegrams, LLC type 1 protocol telegrams are used without prior establishment of communication and delivery confirmation at the LLC layer, performed in channels A, B in parallel. Next new telegram or repeated frame can be transmitted after delivery of the next address telegram and receipt of the ACK acknowledgement telegram at the RPM layer on any of the 2 buses, without waiting for the receipt telegram on the other bus. This ensures synchronous transmission of telegrams and their operational redundancy, and also eliminates the impact of increased telegram delivery time on one of the buses due to its failure on the redundant bus performance.

The receiving device ADi, based on the individual numbers of telegrams received via two TLA buses, analyzes the order of telegram issuance by the sending device in relation to the INRij number value stored in the RPM service of the last telegram received via one of the EN-2a, EN-2b buses. The receiving device accepts a telegram if it is issued later than the last received telegram (a new telegram), does not accept it, if it is issued simultaneously with the last received, but via a different bus (a copy of the last received telegram in the receiving buffer), or it is issued earlier than the last received telegram (a delayed copy of a previously received telegram or a delayed and previously not yet received telegram).

Confirmation of receiving an address target telegram over one of the buses is made using a special ACK acknowledgment response telegram, which the client-recipient of the ADi address telegram generates in the RPM reservation service and transmits to the ASj sending device in the form of 2 identical application frames via buses 1a and 1b.

Before transmitting the ACK telegram, the receiving device ADi of the target telegram generates and places within the ACK telegram data field the IDij telegram identifier, the FIij repeat frame identifier and the status STij of the TLA telegram delivery to the APM application layer. The ACK telegram is being generated (IDij, IFij, STij).

The ACK telegram identifier IDij is generated by the ADi device by assigning the individual INji number value of the received and accepted target address telegram to it: IDij:= INji.

The ACK telegram frame identifier FIij is generated by the ADi device by assigning the number value Fuji of the received and accepted repeated TLA telegram frame to it: FIij:= FNji.

Individual numbering is not used when transmitting ACK telegrams.

Based on the operation code and identifiers IDij, IFij, the ASj device in the RPM service recognizes the ACK telegram or its repeated frame, received respectively in response to the target TLA_{R} telegram or the TLA_{R} telegram repeated frame transmitted to them. The ASj device accepts ACK, if IDij = NTCji and FIij = RCji. The ACK telegram is not accepted, if IDij ≠ NTCji or FIij ≠ RCji.

The ACK telegram STij status displays the delivery result for the address telegram from the RPM service to the APM application layer of the ADi device. Depending on the STij value, the ASj device completes the telegram transmission, registering successful telegram delivery, if STij = 11, or non-delivery, if STij = 10. If the ASj device receives a response telegram with the status STij = 01 or does not receive an ACK response telegram within a timeout time of 30 ms, it performs the telegram retransmission procedure up to 2 times with response analysis, which ends either with no telegram delivery or successful telegram delivery.

Two algorithms are proposed - computational and tabular - to determine the receipt/non-receipt conditions of the current address telegram by the RPM service according to its individual INji number and the individual number value of the last received INRij telegram stored in the RPM service.

The computational algorithm to determine the receipt/non-receipt conditions of an address telegram is illustrated in the diagrams, Fig. 5 and Fig. 6.

These diagrams show the cyclic change of NTCji counter states in time from 0 to L - 1 during the transmission of address telegrams and the position of individual INji number of the current received telegram.

At the same time, regardless the position of the last received telegram number within the current cycle of changes in the NTCji counter, the numbers of received telegrams in the amount of (L/2 -1) issued later than the last received telegram with the INRij number differ from (L/2 + 1) numbers of non-received telegrams issued earlier than the last received telegram, i.e. all numbers within this range by the value of L are unique regardless the INRij number value.

Expressions for calculating receipt/non-receipt ratios for a telegram depend on the position of the last received INRij telegram number in the cycle of changes in the NTCji counter state, namely, values for the position offset Δ to the right in Fig. 5 or to the left in Fig. 6 relative to the counter state NTCji = L/2.

Fig. 5 shows the calculation of receipt/non-receipt conditions for telegrams at Δ = (INRij - L/2) > 0.

Two ranges of telegram numbers 32, 33 relative to the INRij number with a value of L/2 each are shown. Telegrams with INji numbers from the 32 range are not accepted. Telegrams with numbers from the 33 range are accepted, except for those with the number INji = INRij.

Range 33 includes two subranges: 33.1 and 33.2. Telegram numbers of subrange 33.1 are included in the same cycle of the NTCji counter, where the INRij number is located. These telegrams are received according to the ratio Inji > INRij. Telegram numbers of the 33.2 range are included in the next NTCji change cycle, where telegrams are issued later than telegrams with the INRij number, but their numbers are Inji ≤ INRij.

According to Fig. 5, the calculation of receipt/non-receipt conditions for telegrams is performed as follows:
1) When (INji - Δ) > 0 (the INji range: 32, 33.1), then
   when INji - INRij > 0, then the telegram is received,
   when INji - INRij ≤ 0 (the 32 range), the telegram is not received.
2) When (INji - Δ) ≤ 0 (the INji range: 33.2), the telegram is received.

Fig. 6 shows the calculation of receipt/non-receipt conditions for telegrams at Δ = (INRij - L/2) ≤ 0.

Two ranges of telegram numbers 35, 36 relative to the INRij number. Telegrams with INji numbers from the 35 range are not accepted. Telegrams with numbers from the 36 range are accepted, except for those with the number INji = INRij.

Range 35 includes two subranges: 35.1 and 35.2. Telegram numbers of subrange 35.1 are included in the same NTCji change cycle, where the INRij number is located. These telegrams are not received according to the ratio INji ≤ INRij. Telegram numbers of the 35.2 range are included in the previous NTCji change cycle, where telegrams are issued earlier than telegrams with the INRij number, but their numbers are INji > INRij.

According to Fig. 6, the calculation of receipt/non-receipt conditions for telegrams is performed as follows:
1) When (INij - L + Δ) < 0 (the INij range: 35.1, 36), then
   when INji - INRij > 0, (the INji range: 36), then the telegram is received,
   when INji - INRij ≤ 0 (the INji range: 35.1), then the telegram is not received.
2) When (INji - L+ Δ) ≥ 0 (the INji range: 35.2), then the telegram is not received then the telegram is not received.

The tabular algorithm for determining the receipt/non-receipt conditions for any address telegram is illustrated by the example of a table for L = 8, Fig. 7. For individual telegram numbers by the module 8, the table shows the receipt/non-receipt conditions for telegrams with individual numbers INji = 0÷7 at values of the INRij number of the last received telegram INRij = 0÷7.

The digit 1 in the table column at the intersection of the column with the INji number and the row with the INRij number means that with such values of the INji and INRij numbers, the telegram is received, and the digit 0 means that the telegram is not received.

The tabular method does not require calculations and provides a higher estimation performance, but it requires having memory in order to place the table, the amount of that depends on the selected value of L. When L = 256 (the NTCji counter is 8-bit) and the byte representation of the table data requires 64 KB of memory, which is acceptable. For large values of L, a computational algorithm for analyzing numbered telegrams may be more preferable.

Broadcast telegrams of the TLB application layer are generated by the APM 26 application protocol service, Fig. 2, Fig.3, of the sending device: the gateway unit or the automation processor, and are transmitted to the receiving devices via the LLC 23 protocol in mode 1 without confirmation of delivery in the LLC protocol via two channels of the communication module and buses 1a, 1b in the form of two identical frames without individual numbering.

Gateways 4, Fig. 1, 3, transmit broadcast SYN time synchronization telegrams in accordance with the sequence and regulated time sequencing from 5 seconds to 20 seconds, set by the UULS 11, Fig. 1.

Automation processors 3, Fig. 1, 2, transmit ANZ-type broadcast telegrams for the UULS 11 notification about the status of automation processors 3 and bus 1. These telegrams are transmitted by different automation processors event-wise at arbitrary time intervals.

According to the filtering and receiving method of broadcast telegrams, automation equipment connected to the redundant bus 1, Fig. 1, are divided into 2 groups.

Group 1 includes low-level automation equipment such as the automation processor 3, that receive and execute only broadcast SYN time synchronization telegrams from broadcast telegrams transmitted via buses 1a, 1b. At the same time, only one frame of the two frames received via buses 1a, 1b is received by this equipment for execution, as when receiving TLA address telegrams, the second frame (copy) received via the other bus is discarded.

The remaining broadcast telegrams transmitted via bus 1, including ANZ-type notification telegrams, are not used in equipment of group 1 and are discarded by the first TF 22 filtering services, Fig. 2. When an overload is detected on one of the buses 1a, 1b caused by a *broadcast storm,* the filtering service 22 of the automation processor 3, Fig. 1, 2, prevents processor overload on this bus by periodically blocking processing by interrupt of all broadcast and address telegrams stored in the receiving buffer and arriving in the buffer within the telegram flow measurement intervals. Also, when an overload is detected, the filtering service 22 prohibits the execution of SYN telegrams and address telegrams received via this bus for the entire duration of the *storm* in order to exclude the execution of SYN telegrams with irrelevant time and address telegrams with irrelevant data due to their possible delay in a faulty bus and further reduce the processor load.

Gateways 4 belong to the equipment of group 2.

Gateways 4, Fig. 1, 3, in normal operation, receive broadcast ANZ-type telegrams for transmission to the UULS 11, Fig. 1, notifications about events in the automation complex and the bus as well as address telegrams. ANZ telegrams about the condition of one of the 2 buses of the redundant bus are usually transmitted over a serviceable bus and contain data about the failure type of the other bus and its identifier. Therefore, the ANZ application telegrams of both buses arrive at the gateway application level in a common file and are stored in this form in the UULS 11 archive. They can be used to identify a faulty bus 1a or 1b. Broadcast SYN telegrams are discarded by filtering services of the gateways.

Address telegrams are received on one of the 2 buses, on which the telegram arrives first in time. Telegram copies received on another bus and delayed address telegrams are discarded in accordance with the individual numbering procedure, the data is sent to the UULS 11, Fig. 1, for processing and analysis.

When there is a *broadcast storm* on one of the buses 1a, 1b, the second filtering service 25 of the gateway 4 prevents processor overload on this bus and blocks processing by interrupt of all stored and coming into the receiving buffer broadcast and address telegrams in the overload measurement intervals. Moreover, the filtering service 25 prohibits the execution of broadcast and address telegrams received via this bus for the entire duration of the *storm* in order to exclude the execution of ANZ telegrams and address telegrams with irrelevant data due to their possible delay in a faulty bus and additionally reduce the processor load in the gateway communication module.

Data of address telegrams received in accordance with the individual numbering procedure from both buses 1a, 1b and a file with ANZ application broadcast telegrams received on both buses and indicating failures of the other bus or the channel of the module connected to the other bus are used to analyze events of the automation system and bus in the UULS archive under normal operating conditions (in the absence of a broadcast storm).

Broadcast ANZ telegrams generated in communication modules when an overload is registered and transmitted via a serviceable bus, as well as address telegrams transmitted via a serviceable bus, are used to analyze events of the automation system and the bus under the broadcast storm condition.

Fig. 8 shows the filtering structure in automation processors.

All telegrams received in the communication module 6 of the automation processor 3, Fig. 1, via bus 1a / 1b, are transmitted via the direct access channel 41a / 41b, to the corresponding receiving buffer 43a / 43b of the first/second channel 40a / 40b of the communication module of the automation processor.

In each channel of the communication module of the automation processor, after writing a telegram to the corresponding receiving buffer 43a / 43b, an interrupt is formed, and by this (the interrupt) the control is transmitted to the telegram processing program 43a / 43b of the first filtering service TF 22a / 22b, that reads from the receiving buffer via the line 60a / 60b and processes the telegram that caused the interrupt.

The telegram processor 45a of the first TF 22a filtering service (telegrams received via the first channel) performs the following functions in automation equipment of group 1:
1) Periodically starts over the line 63a (when broadcast or address telegrams arrive over line 60a) the first timeout 46a with a default duration of 2 seconds. The timeout 46a is counted by an interrupt from timer 48 with a frequency of 100 Hz over the line 69.
2) Periodically measures the broadcast and address telegram flow, including SYN, ANZ broadcast telegrams and broadcast telegrams not related to the redundant bus 1, by counting telegrams in a counter 44a of N capacity during the timeout interval 46a and registering an overload by counter overflow displayed on the line 72a.
3) When there is no overload and, accordingly, overflow of the counter 44a, the telegram processor 45a executes the input SYN telegram during the timeout 46a and directly writes over the line 17a the current time value from the telegram data field to the real-time counter 49 of the communication module of the automation processor; transmits TLA address telegrams over the line 16a to LLC protocol 23a and then over the line 27a to RPM reservation service 24 for analysis and processing in accordance with the numbering procedure and subsequent execution in application protocol 26; discards broadcast telegrams of other types, including ANZ telegrams.
4) After the SYN telegram is received for execution, the telegram processor 45a starts a second timeout 47a over the line 64a and it takes 5 seconds by default, prohibiting for this time the execution of a copy of the SYN telegram arriving on the other bus and the execution of new SYN telegrams arriving on both buses at irregular time intervals of less than 5 seconds after the executed telegram and additionally prohibiting the execution of SYN telegrams arriving during the measurement of overload by the first timeout 46a caused by a *broadcast storm.*
5) Prevents the module processor from being overloaded with broadcast and address telegrams via a faulty bus during a *broadcast storm* by blocking the processing by the interrupt over the line 67a of all broadcast and address telegrams stored in the receiving buffer 43a and arriving into the buffer in the overload measurement intervals set by the first timeout 46a. Blocking of telegram processing by interrupt is performed when the telegram counter 44a overflows from the moment the counter overflows until the end of the timeout 46 a.
6) When the counter 44a overflow is first registered, the telegram processor sets the overload flag to state 1, that prohibits the execution of SYN telegrams during the entire duration of the broadcast storm by prohibiting the time data transmission from the telegram data field to the real-time counter 49 via the line 17a and prohibits the execution of address telegrams by prohibiting the transmission of telegrams to the LLC protocol 23 via the line 16a. The prohibition is established in order to prevent the execution of delayed telegrams with irrelevant data on a faulty bus.
6) Removes the prohibition on the execution of SUN telegrams and address telegrams by setting the overload flag to 0 after 10-fold (by default) registration of no overload on the line 72a at 10 timeouts 46 a, in a row.
7) When registering an overload in the first channel and setting the overload flag equal to 1, it generates and issues an ANZ9811 telegram on the line 71a to the serviceable bus 1b, notifying the UULS 11, Fig. 1, about an overload on the 1a bus.
8) If no overload is detected in the first channel and the overload flag is set to 0, it generates and issues an ANZ9821 telegram to the 1b bus via the line 71a to notify the UULS about the overload elimination on the 1a bus.

The TF 22b telegram filtering service on the second channel performs telegram filtering functions similar to the TF 22a service. At the same time, the function of ANZ9811, ANZ9821 telegrams generated by the TF 22a service is performed by ANZ9812, ANZ9822 telegrams generated by the TF 22b service.

Fig. 9 shows the filtering structure in gateways.

All telegrams entering the communication module 7 of the interface gateway 4, Fig. 1, via buses 1a / 1b, are transmitted via direct access channels 51a / 51b to the corresponding receiving buffers 53a / 53b of the first / second channels 50a /50b of the gateway communication module.

In each channel of the gateway communication module 7, after writing a telegram to the corresponding buffer 53a / 53b, an interrupt is formed, by which control is transmitted to the telegram processing program 55a /55b of the filtering service TF1 25a / 25b, which reads from the receiving buffer and processes the telegram that caused the interrupt.

The telegram processor 55a of the second filtering service 25a of telegrams received on the first channel performs the following functions in network equipment of group 2:
1) Periodically starts over the line 83a, when broadcast or address telegrams are received over the line 80a, the overload registration timeout 56a with a default duration of 2 seconds. The overload timeout 56a is counted down by interrupting the timer 58 with a frequency of 100 Hz.
2) Periodically measures the broadcast and address telegram flow, including SYN, ANZ broadcast telegrams and broadcast telegrams not related to the EN2 bus, by counting telegrams on the line 80a and registering overflow on the line 92a of the telegram counter 54a of N capacity during the overload timeout 56a.
3) When there is no overload and, accordingly, overflow of the counter 54a during the timeout 56a, the telegram processor 55a transmits ANZ telegrams via the line 17a to the LLC protocol 23a for subsequent transmission via the line 18a to a separate common application protocol file designed to register application ANZ broadcast telegrams of buses 1a, 1b and transmits TLA address telegrams via the line 16a to the LLC protocol 23a for further execution in the application protocol 26 of one of two identical RPM 24 telegrams selected in accordance with the numbering procedure in the RPM reservation protocol, discards broadcast telegrams of other types, including SYN telegrams.

Similarly, the TF1 25b filtering service transmits ANS telegrams arriving via the B channel to a shared file with ANZ telegrams arriving via the A channel.
4) Prevents the communication module processor from being overloaded with broadcast and address telegrams over the bus 1a during a *broadcast storm* by blocking the processing by interrupt over the line 87a of all broadcast and address telegrams stored in the receiving buffer 53a and arriving into the buffer in the overload measurement intervals set by the overload timeout 56a. Blocking of telegram processing by interrupt is performed when the telegram counter 54a displayed on the line 92a overflows from the moment the counter overflows until the timeout 56a ends.
5) When the counter 54a overflow is registered first time, the telegram processor sets the overload flag to state 1, that prohibits the execution of ANZ telegrams during the entire duration of the broadcast storm by prohibiting the recording of these telegrams on the line 17a in the LLC protocol 23a and further on the line 18a in a separate application protocol file 26, common to the telegrams of buses 1a, 1b. The overload flag also prohibits the execution of TLA address telegrams by prohibiting the transmission of these telegrams via the line 16a to LLC protocol 23a for further execution in the application protocol 26 after selecting one of two identical telegrams in the RPM 24 reservation service in accordance with the numbering procedure and transmitting it via the line 18a to the application protocol.

The prohibition is established in order to prevent the delayed execution of telegrams with irrelevant data on a faulty bus.
6) Removes the prohibition for recording the ANZ telegram in the LLC 1 protocol on the basis of 0 bus overload after 10-fold registration of no overload at 10 timeouts 56a in a row.
7) When an overload is registered in the first channel and the overload flag is set to 1, an internal message ANZ9811 notifies the UULS about an overload on the bus 1a is generated and issued via the bus channel 1b.
8) When no overload is detected in the first channel and the overload flag is set to 0, an internal message ANZ9821 notifies the UULS about the elimination of overload on the bus 1a is generated and issued via the bus channel 1b.

The TF1 telegram filtering service 25b performs filtering functions on the channel B similarly to the TF1 service 25a. At the same time, the function of ANZ9811, ANZ9821 telegrams generated by the TF1 25a service is performed by ANZ9812, ANZ9822 telegrams generated by the TF1 service 25b.

The filtration efficiency depends on the capacity value of the N telegram counters 44, 54 and the overload timeout values 46, 56 in Fig. 8 and Fig.9. Selected values of N and overload timeout values should ensure reliable registration of a broadcast storm and exclude false storm registration at regular telegram flows. By default, the N value is assumed to be equal to N = 1000 in order to prevent false storm registration during a single simultaneous issuance of ANZ telegrams by the maximum number of automation processors, which in modern automation systems of nuclear power plants can be about 800 maximum.

## Claims

1. A redundant bus (1) comprising:
a first bus (1a) and a second bus (1b), which are independent of one another and are configured in accordance with the standard for the Industrial Ethernet switch interface and point-to-point-type connections using Turbo Ring technology for the serial connection of network switches (2a, 2b) into a virtual ring;
communication modules (6) which connect backup automation processors (3) to a bus via a first channel and a second channel, wherein the first channel connects to the first bus switches, and the second channel connects to the second bus switches, wherein each two backup automation processors (3) are connected via an interprocessor interface, have common network addresses and individual self-control and backup control means;
wherein the communication modules (6) of the backup automation processors (3) are installed in accordance with the data communication model of OSI terminals with the typical Ethernet interface protocols that control data transmission over the bus: PHY physical protocol at OSI physical layer 1, LLC logical link protocol and MAC data medium access protocol at OSI channel layer 2 and AMP unified application protocol of the EN bus at OSI application layer 7;
**characterized in that** additional communication modules (7) are introduced in the redundant bus (1) which connect to bus backup connection gateways (4) and transmit technical data and diagnostic information between low-level automation devices and an upper block level system (11) in accordance with the OSI information model for the communication of terminal devices on layers 1, 2 and 7, said gateways (4) being independent devices with individual network addresses and external backup control from the upper block level system side;
wherein a RPM backup service (24) is installed at the OSI layer 7 in the communication modules (6) of the backup automation processors (3) and the communication modules (7) of the connection gateways (4), in addition to the unified OSI layer 7 application data transfer protocol and standard OSI layer 1, 2 protocols, the RPM backup service (24) controlling the synchronous transmission of address and broadcast telegrams over the first bus (1a) and the second bus (1b) of the redundant bus (1) over the LLC protocol in mode 1 with the confirmation of address telegram delivery within the RPM service (24) via at least one of the buses, and generating individual address telegram numbers for a module L during transmission, and analyzing the procedure for issuing telegrams relative to the number of the last received telegram in order to receive new telegrams and discard delayed duplicates of previously received telegrams;
a first filtering service (22) (TF) is installed on the MAC sublayer of OSI layer 2 for the telegram flows occurring during a "broadcast storm" and consisting of broadcast and address telegrams transmitted in a broadcast mode when the recipient is unavailable;
a second filtering service (25) (TF1) is installed on the MAC sublayer of OSI layer 2 in the first and second channels of the connection gateway (4) for the said telegram flows, preventing an overload of the communication module processors of the automation processors (3) and the connection gateways (4), respectively, and execution of delayed irrelevant telegrams during the broadcast storm.

## Patentansprüche

1. Ein redundanter Bus, (1) umfassend:
eine erste Busleitung (1a) und eine zweite Busleitung (1b), wobei die erste und die zweite Busleitung unabhängig voneinander ausgeführt und gemäß einem Standard für industrielle Ethernet-Switch-Schnittstellen sowie Punkt-zu-Punkt-Verbindungen unter Verwendung der Turbo-Ring-Technologie zur seriellen Verbindung von Netzwerkschaltern (2a, 2b) in einem virtuellen Ring konfiguriert sind;
Kommunikationsmodule (6), welche redundante Automatisierungsprozessoren (3) über einen ersten Kanal und einen zweiten Kanal mit dem Bus verbinden, wobei der erste Kanal mit Switches der ersten Busleitung und der zweite Kanal mit Switches der zweiten Busleitung verbunden ist, wobei jeweils zwei redundante Automatisierungsprozessoren (3) über eine Interprozessor-Schnittstelle verbunden sind, gemeinsame Netzwerkadressen aufweisen und jeweils über eigene Mittel zur Selbstüberwachung und zur Redundanzsteuerung verfügen;
wobei die Kommunikationsmodule (6) der redundanten Automatisierungsprozessoren (3) gemäß dem OSI-Referenzmodell für die Datenübertragung von Endgeräten implementiert sind, unter Verwendung typischer Ethernet-Schnittstellenprotokolle zur Steuerung der Datenübertragung im Bus: das physikalische Protokoll PHY auf Schicht 1 des OSI-Modells, das Protokoll zur logischen Kanalsteuerung LLC sowie das Zugriffsprotokoll auf das Übertragungsmedium MAC auf Schicht 2 des OSI-Modells, ein einheitliches Anwendungsprotokoll AMP des EN-Busses auf Schicht 7 des OSI-Modells;
**dadurch gekennzeichnet, dass** zusätzliche Kommunikationsmodule (7) in den Bus (1) integriert sind, die mit Gateways (4) für redundante Busverbindungen verbunden sind, wobei diese Gateways (4) als unabhängige Geräte mit eigenen Netzwerkadressen und mit einer externen Redundanzsteuerung durch ein übergeordnetes Leitsystem (11) ausgeführt sind, und wobei die Kommunikationsmodule (7) technische Betriebsdaten und Diagnosedaten zwischen Automatisierungsgeräten der unteren Ebene und dem übergeordneten Leitsystem (11) gemäß dem OSI-Modell auf den Schichten 1, 2 und 7 übertragen;
wobei auf Schicht 7 des OSI-Modells in den Kommunikationsmodulen (6) der redundanten Automatisierungsprozessoren (3) und in den Kommunikationsmodulen (7) der Gateways (4) zusätzlich zu dem einheitlichen Anwendungsprotokoll ein Redundanzdienst RPM (24) implementiert ist, gemäß dem Anwendungsdatenübertragungsprotokoll der OSI-Schicht 7 und den Standardprotokollen der OSI-Schichten 1 und 2 steuert der Redundanzdienst RPM (24) die synchrone Übertragung von adressierten und Broadcast-Telegrammen über die erste Busleitung (1a) und die zweite Busleitung (1b) des redundanten Busses (1) unter Verwendung des LLC-Protokolls im Modus 1, wobei die Zustellung adressierter Telegramme innerhalb des RPM-Dienstes (24) über mindestens eine der Busleitungen bestätigt wird. Zusätzlich generiert der RPM-Dienst (24) individuelle Nummern für adressierte Telegramme an das L-Modul während der Übertragung und analysiert die Reihenfolge der Ausgabe der Telegramme im Vergleich zur Nummer des zuletzt empfangenen Telegramms, um neue Telegramme zu akzeptieren und verzögerte Duplikate bereits empfangener Telegramme zu verwerfen;
auf der MAC-Unterschicht der OSI-Schicht 2 ist ein erster Filterdienst (22) (TF) implementiert, der zur Verarbeitung von Telegrammströmen vorgesehen ist, die während eines sogenannten "Broadcast-Sturms" entstehen und aus Broadcast- und adressierten Telegrammen bestehen, die im Broadcast-Modus gesendet werden, wenn der Empfänger nicht erreichbar ist;
auf der MAC-Unterschicht der OSI-Schicht 2 ist in den ersten und zweiten Kanälen des Verbindungsgateways (4) ein zweiter Filterdienst (25) (TF1) installiert, der eine Überlastung der Prozessoren der Kommunikationsmodule der Automatisierungsprozessoren (3) sowie der Verbindungsgateways (4) verhindert und gleichzeitig die Ausführung verzögerter, nicht mehr aktueller Telegramme während eines Broadcast-Sturms unterbindet.

## Revendications

1. Un bus redondant (1) comprenant :
un premier bus (1a) et un second bus (1b), indépendants l'un de l'autre et configurés conformément à la norme pour l'interface de commutation Ethernet industriel et les connexions point à point utilisant la technologie Turbo Ring pour la connexion en série de commutateurs réseau (2a, 2b) en un anneau virtuel ;
des modules de communication (6) connectant des processeurs d'automatisation de secours (3) à un bus via un premier canal et un second canal, le premier canal étant connecté aux premiers commutateurs de bus et le second canal aux seconds commutateurs de bus. Chaque processeur d'automatisation de secours est connecté via une interface interprocesseur, possède des adresses réseau communes et des moyens d'autocontrôle et de contrôle de secours individuels.
les modules de communication (6) des processeurs d'automatisation de secours (3) sont installés conformément au modèle de communication de données des terminaux OSI avec les protocoles d'interface Ethernet classiques qui contrôlent la transmission de données sur le bus : protocole physique PHY au niveau de la couche physique OSI 1, protocole de liaison logique LLC et protocole d'accès au support de données MAC de la couche canal OSI 2, et protocole d'application unifié AMP du bus EN de la couche application OSI 7 ;
**caractérisés en ce que** des modules de communication supplémentaires (7) sont intégrés au bus redondant (1) pour se connecter à des passerelles de connexion de secours (4) et transmettre des données techniques et des informations de diagnostic entre des dispositifs d'automatisation de bas niveau et un système de niveau bloc supérieur (11), conformément au modèle d'information OSI pour la communication des terminaux des couches 1, 2 et 7. Ces passerelles (4) sont des dispositifs indépendants dotés d'adresses réseau individuelles et d'un contrôle de secours externe depuis le système de niveau bloc supérieur ;
où un service de secours RPM (24) est installé au niveau de la couche OSI 7 dans les modules de communication (6) des processeurs d'automatisation de secours (3) et les modules de communication (7) des passerelles de connexion (4), en plus du protocole unifié protocole de transfert de données d'application de couche OSI 7 et protocoles standard OSI de couches 1 et 2, le service de secours RPM (24) contrôlant la transmission synchrone des télégrammes d'adresse et de diffusion sur le premier bus (1a) et le second bus (1b) du bus redondant (1) via le protocole LLC en mode 1 avec confirmation du télégramme d'adresse Livraison au sein du service RPM (24) via au moins un des bus, génération de numéros de télégrammes d'adresse individuels pour un module L pendant la transmission, et analyse de la procédure d'émission des télégrammes par rapport au numéro du dernier télégramme reçu afin de recevoir les nouveaux télégrammes et d'éliminer les doublons retardés des télégrammes précédemment reçus ;
un premier service de filtrage (22) (TF) est installé sur la sous-couche MAC de la couche OSI 2 pour les flux de télégrammes se produisant lors d'une « tempête de diffusion » et constitués de télégrammes de diffusion et d'adresse transmis en mode diffusion lorsque le destinataire est indisponible ;
un deuxième service de filtrage (25) (TF1) est installé sur la sous-couche MAC de la couche OSI 2, dans les premier et deuxième canaux de la passerelle de connexion (4), pour lesdits flux de télégrammes empêchant une surcharge des processeurs des modules de communication des processeurs d'automatisation (3) et des passerelles de connexion (4), respectivement, et l'exécution de télégrammes non pertinents retardés pendant la tempête de diffusion.
